# FASCICULE DE BREVET EUROPEEN

(11) **EP 2 524 798 B1**
(45) Date de publication et mention de la délivrance du brevet: **16.03.2016**
(21) Numéro de dépôt: 12167903.9
(22) Date de dépôt: 14.05.2012
(51) Int. Cl.: B29D 11/00, G02C 7/04

(54) **Lentille ophtalmique anti-reflets et son procédé de fabrication**
Entspiegelte Kontaktlinse und ihr Herstellungsverfahren
Anti-glare ophthalmic lens and its manufacturing method

(30) Priorité: 16.05.2011 FR 1154226
(43) Date de publication de la demande: 21.11.2012
(73) Titulaire: ESSILOR INTERNATIONAL (COMPAGNIE GENERALE D'OPTIQUE), 94220 CHARENTON LE PONT (FR)
(72) Inventeur: Lapprand, Aude, 94220 CHARENTON-LE-PONT (FR)
(74) Mandataire: Cabinet Plasseraud

(56) Documents cités:
- EP-A2- 2 119 553
- US-A1- 2005 238 882
- US-A1- 2005 269 721
- US-A1- 2006 219 347
- US-A1- 2007 270 062

## Description

La présente invention concerne un article optique, de préférence une lentille ophtalmique, comprenant un substrat transparent, un film thermoplastique transparent collé sur le substrat transparent *via,* une couche adhésive, un revêtement dur résistant à l'abrasion et aux rayures et un revêtement anti-reflets multicouches, ledit article présentant une résistance améliorée au craquèlement du revêtement anti-reflets. L'invention concerne également un procédé de fabrication d'un tel article.

Les vernis anti-abrasifs sont connus pour réduire de manière indésirable la résistance aux chocs de lentilles ophtalmiques organiques. Une approche pour résoudre ce problème a consisté à interposer, entre le verre organique et le vernis anti-abrasion, une couche de primaire en élastomère (voir par exemple US 6 858 305 et US 7 357 503). Ce primaire, déposé sous forme de composition liquide puis éventuellement réticulé, absorbe non seulement les chocs reçus par le vernis anti-abrasif mais assure également la bonne adhérence du vernis abrasif sur le substrat. Son épaisseur est généralement comprise entre 1 et environ 20 µm.

Il est également connu de revêtir des articles optiques tels que des lentilles ophtalmiques ou des écrans, de revêtements anti-reflets formés par un empilement multicouches de matériaux minéraux diélectriques tels que SiO, SiO₂, Si₃N₄, TiO₂, ZrO₂, Al₂O₃, MgF₂ ou Ta₂O₅. Ces revêtements anti-reflets sont toujours déposés au-dessus des revêtements durs anti-abrasifs.

Un des problèmes rencontrés pour tous les types de revêtements anti-reflets minéraux déposés sur des substrats organique est leur grande fragilité due principalement à leur nature minérale. Lorsque le substrat organique de l'article optique est soumis à une déformation ou une dilatation importante, le revêtement anti-reflets n'arrive généralement pas à suivre cette déformation et la contrainte subie se traduit alors par un craquèlement qui se propage sur l'ensemble de la surface du revêtement, rendant généralement l'article inutilisable. L'oubli d'une paire de lunettes à revêtement anti-reflets sous le pare-brise d'une voiture exposée au soleil peut ainsi se traduire au bout de quelques minutes seulement par une réduction inacceptable de la transparence des verres.

A la connaissance de la Demanderesse, aucun moyen efficace n'a été proposé jusqu'à ce jour pour réduire de façon satisfaisante la fragilité inhérente des revêtements anti-reflets et augmenter significativement la température ou la contrainte de l'article optique au-delà de laquelle la dilatation ou la déformation du substrat provoque le craquèlement du revêtement anti-reflets.

La présente demande propose donc pour la première fois un moyen permettant de « découpler » de façon satisfaisante la déformation et/ou la dilatation de substrats organiques de celle des empilements multi-couches anti-reflets dont ils sont revêtus.

Ce moyen consiste en un film thermoplastique transparent ayant une température de transition vitreuse supérieure à la température ambiante, collé sur le substrat organique *via* une couche adhésive à faible température de transition vitreuse. Ce film thermoplastique est revêtu d'un vernis anti-abrasif classique qui, à son tour, est revêtu du revêtement anti-reflets.

La présente invention a par conséquent pour objet un article optique comprenant, dans l'ordre,
(a) un substrat transparent en verre organique, de préférence un substrat de lentille ophtalmique,
(b) une couche adhésive recouvrant au moins une des faces du substrat transparent,
(c) un film transparent en polymère thermoplastique fixé sur le substrat transparent par l'intermédiaire de la couche adhésive,
(d) un revêtement dur anti-abrasion recouvrant le film transparent en polymère thermoplastique, et
(e) un revêtement anti-reflets multicouches formé d'une alternance de couches minérales à fort et faible indice de réfraction,
caractérisé en ce que le polymère thermoplastique formant le film transparent est choisi parmi le triacétate de cellulose (TAC) et le poly(éthylène téréphtalate) (PET) ; et
la couche adhésive est une couche d'adhésif sensible à la pression ou une couche d'adhésif thermofusible.

Dans un article optique selon l'invention, le primaire en élastomère classiquement présent sous le vernis dur anti-abrasion, est ainsi remplacé par un film thermoplastique collé via une couche adhésive sur le substrat organique. Comme il sera montré dans les exemples ci-après, ce remplacement se traduit par une augmentation de la température critique d'au moins 20 °C et par un doublement de la contrainte critique que l'article optique peut supporter sans que le revêtement anti-reflets se craquèle.

La présente invention a également pour objet un procédé de fabrication selon la revendication 6, le procédé comprenant :
(A) la mise à disposition d'un substrat transparent, de préférence d'un substrat de lentille ophtalmique, en verre organique,
(B) le dépôt d'un revêtement anti-abrasion sur un film transparent en polymère thermoplastique,
(C) le collage de la structure bi-couché obtenue à l'étape (B) par l'intermédiaire d'une couche adhésive sur le substrat transparent, et
(D) la formation d'un revêtement anti-reflets multicouches constitué d'une alternance de couches minérales à fort et faible indice de réfraction, sur le revêtement dur anti-abrasion.

L'étape (C) de collage de la structure bi-couche, constituée du film de polymère thermoplastique revêtu sur une de ses faces d'un revêtement dur anti-abrasion, peut en principe se faire d'au moins deux façons différentes :
- la couche adhésive peut d'abord être appliquée sur la face du film transparent thermoplastique non couverte du revêtement anti-abrasion, l'ensemble étant ensuite appliqué sur le substrat, ou bien
- la couche adhésive peut être appliquée sur le substrat, la structure bi-couche, préparée dans l'étape (B), étant ensuite mise en contact avec cette couche adhésive sur le substrat.

On peut bien entendu également envisager l'application successive d'une couche d'adhésif, d'un film en polymère thermoplastique, d'un revêtement dur anti-abrasion, puis d'un revêtement anti-reflets sur une ou les deux faces du substrat.

Le substrat organique de l'article optique de la présente invention peut être n'importe quel substrat organique couramment utilisé dans le domaine optique et en particulier ophtalmique.

On peut citer à titre d'exemples les substrats en polycarbonate, en polyamide, en polyimide, en polysulfone, en copolymères de poly(éthylène téréphtalate) et de polycarbonate, en polyoléfines, notamment en polynorbornène, en homopolymères et copolymères de diéthylèneglycol bis(allylcarbonate), en polymères et copolymères (méth)acryliques notamment polymères et copolymères (méth)acryliques dérivés de bisphenol-A, en polymères et copolymères thio(méth)acryliques, en polyuréthane et polythiouréthane homopolymères ou copolymères, polymères et copolymères époxy et polymères et copolymères épisulfide.

Le substrat organique peut être soumis, avant application ou mise en contact avec la couche d'adhésif, à un traitement de surface physique, par exemple de type corona ou plasma, ou chimique, généralement destiné à améliorer l'adhérence.

Le polymère formant le film thermoplastique collé sur le substrat doit être un polymère transparent, c'est-à-dire un polymère présentant une diffusion inférieure à 0,5 %, de préférence comprise entre 0,2 et 0,3 % et un facteur de transmission au moins égal à 90 %, de préférence compris entre 93% et 98 % (ces mesures de diffusion et de facteur de transmission sont réalisées selon la norme ASTM D1003 sur un appareil Haze Guard)

Sa température de transition vitreuse est supérieure à la température d'utilisation de l'article optique, qui est le plus souvent la température ambiante. La température de transition vitreuse du polymère est généralement comprise entre 50 °C et 250 °C, de préférence entre 70 et 200 °C. A la température d'utilisation, le film polymère thermoplastique n'est donc pas à l'état plastique mais à l'état vitreux.

On utilisera en tant que film thermoplastique transparent pour la mise en oeuvre de la présente invention un film en poly(éthylène téréphtalate) ayant une température de transition vitreuse (Tg), mesurée par DMA (analyse mécanique dynamique) comprise entre 50°C et 150°C ou un film de triacétate de cellulose ayant une Tg comprise entre 100°C et 180 °C.

L'épaisseur de ce film en polymère thermoplastique est de préférence comprise entre 50 µm et 150 µm, en particulier entre 60 µm et 100 µm.

Ce film polymère est revêtu sur une de ses faces d'un revêtement anti-abrasif connu en tant que tel. Il s'agit de préférence d'un revêtement anti-abrasif de type vernis nanocomposite à base de silice dispersée dans une matrice organique. De tels vernis sont décrits en détail, par exemple dans le brevet US 5 619 288, EP 0 614 957 et dans la demande internationale WO 02/00561. Parmi les revêtements anti-abrasifs mis en oeuvre dans le cadre de l'invention, on notera les revêtements obtenus à partir d'époxyalkylalkoxysilanes, tels que le γ-glycidoxypropyltrimethoxysilane (GLYMO), et d'alkylalcoxysilanes, tels que le diméthyldiéthoxysilane (DMDES), ou d'hydrolysats de ces composés, et d'un catalyseur tel que l'aluminium acétylacétonate. Préférentiellement, le revêtement anti-abrasif contient aussi un liant colloïdal, tel qu'un oxyde métallique ou de la silice.

Ce revêtement anti-abrasif peut être appliqué selon des procédés connus, par exemple par immersion (*dip coating*), centrifugation (*spin coating*), par étalement (*bar coating*) ou par pulvérisation (*spray coating*)*.*

L'épaisseur de ce revêtement anti-abrasion est similaire à celle des revêtements anti-abrasion connus et est généralement comprise entre 1 et 15 µm, de préférence entre 2 et 10 µm.

Différentes familles d'adhésifs peuvent être mises en oeuvre dans le cadre de l'invention. Ces adhésifs présentent de préférence un module élastique, ou module d'Young, inférieur à celui du substrat et inférieur à celui du film thermoplastique. D'une façon générale l'adhésif présente un module élastique à température ambiante compris entre 10³ et 10⁸ Pa (Pascal). Les adhésifs selon l'invention sont les PSA (*Pressure Sensitive Adhesive*) et les adhésifs thermofusibles (HMA, *Hot Melt Adhesives).*

Par PSA on entend un adhésif de contact sec, généralement de nature viscoélastique, qui ne nécessite qu'une faible pression pour adhérer sur la surface de contact. Les PSA sont caractérisés par le fait qu'ils ne nécessitent pas d'activation par l'eau, un solvant ou par chauffage pour exercer leur caractère adhésif de façon permanente sur une surface de contact.

Avantageusement l'adhésif sensible à la pression (PSA) utilisé est choisi dans le groupe formé par un composé à base de polyacrylate, un copolymère à blocs à base de styrène et un mélange contenant un caoutchouc naturel. Plus particulièrement, on peut citer à tire d'exemples et de façon non limitative, les PSA de compositions générales à base de polyacrylates, de polyméthacrylates, de copolymères éthyléniques tels que les copolymères éthylène-acétate de vinyle, éthylène-acrylate d'éthyle et éthylène-méthacrylate d'éthyle, les PSA à base de caoutchouc synthétique et élastomères incluant les silicones, les polyuréthanes, les styrène-butadiènes, les polybutadiènes, les polyisoprènes, les polypropylènes, les polyisobutylènes, les PSA à base de polymères comprenant des nitriles ou acrylonitriles, les PSA à base de polychloroprène, les PSA à base de copolymères séquencés comprenant des blocs polystyrène, polyéthylène, polypropylène, polyisoprène ou polybutadiène, ainsi que les mélanges de ces polymères.

Ces PSA peuvent également contenir un ou plusieurs additifs choisis notamment parmi les agents de pégosité (*tackifier*), les plastifiants, les liants, les antioxydants, les stabilisants, les pigments, les colorants, les agents dispersants, et les agents diffusants. D'une façon préférentielle dans le cadre de l'invention on utilisera un PSA à base de polyacrylate.

Pour l'application envisagée dans la présente invention, il est important de choisir le PSA de manière à ne pas réduire indésirablement la transparence de l'article optique obtenu. La couche de PSA peut bien entendu présenter un aspect trouble *avant* application sur le substrat organique mais ce trouble doit disparaître après collage.

La force de pelage (test de pelage à 90 °) peut varier entre 10 et 25 N/25mm.

Les PSA disponibles sur le marché et intéressants pour l'utilisation en tant qu'adhésif dans la présente invention sont des PSA de qualité optique, également très utilisés dans le domaine des écrans d'affichage. On peut citer à titre d'exemple des produits commercialisés par la société Nitto Denko, tels que le PSA CS 9621, ou encore l'adhésif 3M 8141, commercialisé par la société 3M.

La couche de PSA peut être appliquée sur le film en polymère thermoplastique avant ou après application du revêtement dur anti-abrasif, mais est de préférence appliquée après celui-ci. La couche PSA peut éventuellement être protégée par une couche à faible adhérence (*release layer*) qui sera décollée directement avant la mise en oeuvre du procédé.

II est également possible d'utiliser dans le cadre de l'invention un adhésif thermofusible (HMA, de l'anglais *hot melt adhesive*)*.* Le terme adhésif thermofusible englobe les HMA classiques qui peuvent fondre et durcir un grand nombre de fois, mais également les HMA réactifs qui sont appliqués comme des HMA classiques mais réticulent et forment ainsi des liaisons adhésives permanentes qu'il est impossible de faire fondre une nouvelle fois.

Des adhésifs thermofusibles de qualité optique sont de préférence des adhésifs à base de polyuréthanes qui se présentent sous forme de dispersions aqueuses de polyuréthanes de haut poids moléculaire. La société Bayer commercialise deux adhésifs theimofusibles appropriés sous les dénominations Dispercoll^{®} U 42 et KA-8758. La société Bond Polymers International LLC propose également deux adhésifs thermofusibles sous forme de dispersions aqueuses de polyuréthanes sous les références Bondthane^{®} UD-104 et Bondthane^{®} UD-108.

Ces dispersions aqueuses peuvent être mélangées, avant application, avec des additifs destinés à modifier leurs propriétés rhéologiques, mécaniques ou optiques. Ainsi, l'ajout d'une silice colloïdale se traduira par une dureté et durabilité accrues.

Les polymères thermofusibles peuvent être choisis parmi les polyoléfines, les polyamides, les polyuréthanes, les poly(uréthane urée), les poly(vinylpyrrolidone), les polyesters, les poly(ester amide), les poly(oxazolines), les systèmes à base de polymères acryliques. Des polyoléfines appropriées en tant qu'adhésifs thermofusibles appropriés sont décrits par exemple dans le brevet US 5128388. On préfère en particulier des polyoléfines choisies parmi les copolymères à blocs élastomères tels que ceux comprenant des blocs de polystyrène, de polybutadiène, de polyisoprène ou des blocs qui sont des copolymères d'éthylène et de butylène.

L'épaisseur de la couche d'adhésif est généralement comprise entre 10 et 50 µm, de préférence entre 15 et 30 µm.

L'étape de collage (C) du procédé selon l'invention est de préférence précédée d'une étape de thermoformage de la structure bi-couche, préparée à l'étape (B), à une température inférieure à la température de transition vitreuse du polymère thermoplastique. Cette étape de thermoformage a essentiellement pour but de donner à la structure bi-couche une forme similaire à celle de la surface sur laquelle il sera collé, afin d'éviter des contraintes, des pliés ou l'endommagement du film multicouche lors de l'étape de collage. La température de thermoformage est de préférence inférieure d'au moins 10 °C à la température de transition vitreuse.

Le thermoformage et le collage du film multicouche sur le substrat en verre organique peuvent être mis en oeuvre selon des techniques connues dans l'art. On peut citer à titre d'exemples de tels procédés ceux décrits en détail dans les demandes EP 2018262 et WO 2006/105999 toutes deux au nom de la Demanderesse.

Le revêtement anti-reflets utilisé dans la présente invention est connu en tant que tel, et est notamment décrit dans la demande de brevet WO 2004/111691 (page 9 ligne 20-26 et page 19).

L'invention a enfin pour objet l'utilisation d'un film transparent en polymère thermoplastique choisi parmi le triacétate de cellulose (TAC) et le poly(éthylène téréphtalate) (PET) dans un article optique comprenant un substrat transparent en verre organique, un revêtement dur anti-abrasion et un revêtement anti-reflets multicouche formé d'une alternance de couches minérales à fort et faible indice de réfraction; ledit film transparent en polymère thermoplastique étant positionné entre le substrat transparent et le revêtement anti-abrasion et étant fixé sur le substrat transparent par l'intermédiaire d'une couche adhésive choisie parmi une couche d'adhésif sensible à la pression ou une couche d'adhésif thermofusible pour réduire le craquèlement du revêtement anti-reflets.

### Exemple

### Préparation de lentilles ophtalmiques selon l'invention

### Etape (A) - Mise à disposition d'un substrat organique

On utilise deux types de verres organiques
(a) un verre en polythiourethane thermodurci ayant un indice de réfraction de 1,6 commercialisé par Essilor sous la dénomination Ormix® .

Tous les verres sont soumis à un traitement de surface par plasma d'oxygène sous pression réduite.

Chaque lot de verre est séparé en deux séries, l'une destinée à recevoir, conformément à l'invention, un film thermoplastique couvert d'un revêtement dur anti-abrasion et d'un revêtement anti-reflets, et l'autre destinée à recevoir un primaire en élastomère, un revêtement dur anti-abrasion et un revêtement anti-reflets (verres comparatifs selon l'état de la technique).

### Etape (B) - Dépôt d'un revêtement anti-abrasion sur un film thermoplastique

On utilise en tant que film thermoplastique transparent
- un film en triacétate de cellulose (FT TD 80SL commercialisé par la société Fuji) d'une épaisseur de 80 µm et d'une température de transition vitreuse, déterminée par analyse mécanique dynamique (DMA de l'anglais *Dynamic Mecanical Analysis*), de 170 °C.

On soumet la surface de ce film à un nettoyage par traitement avec une solution aqueuse de soude, concentrée à 10%, à 60°C pendant 4 minutes, suivi d'une étape de rinçage à l'eau adoucie et de séchage à l'air chaud (60°C)

On dépose sur une des surfaces de ce film par centrifugation une solution thermodurcissable pour revêtement anti-abrasion (comprenant, par rapport au poids total de la composition, 22% de glycidoxypropylmethyldimethoxysilane, 62% de silice colloïdale contenue à 30% dans du méthanol, et 0,70% d'aluminium acétylacétonate) en une épaisseur d'environ 4 µm. Cette couche est ensuite soumise à une réticulation par chauffage pendant 3 heures à 100 °C. La solution thermodurcissable et le procédé d'obtention du revêtement anti-abrasion sont décrits à l'exemple 3 du brevet EP0614957B1.

On applique ensuite sur la face opposée des films ainsi obtenus, une couche de PSA acrylique (Nitto CS9621) en une épaisseur d'environ 25 µm.

Cette structure à trois couches est ensuite thermoformée à une température d'environ 100 °C afin de lui donner la forme de la surface sur laquelle elle sera collée.

### Etape (C) - Collage

Le collage des films multicouches sur les lentilles en verre organique se fait au moyen du procédé décrit dans WO 2006/105999 par application d'une pression uniforme d'environ 0,03 MPa par le biais d'un tampon déformable. Un film est collé sur chacune des faces du substrat.

### Etape (D) - Dépôt d'un revêtement anti-reflets multicouche

On dépose à la surface du revêtement anti-abrasion un revêtement anti-reflets Crizal^{®} Alizé^{®} ou Crizal Forte^{®} lesquels sont notamment décrits respectivement dans les demandes de brevet WO2004/111691 et WO2008/107325.

### Préparation de lentilles ophtalmiques comparatives

On dépose sur le substrat décrit ci-dessus (Ormix^{®}), par immersion (*dip coating*) successivement une couche de primaire à base d'un latex de polyuréthane élastomère et un vernis anti-abrasion (voir Etape (B) ci-dessus). Les lentilles ainsi préparées reçoivent ensuite un revêtement anti-reflets Crizal^{®} Alizé^{®} ou Crizal Forte^{®} dans des conditions strictement identiques à celles utilisées pour les lentilles selon l'invention, de façon à ce que les lentilles comparatives diffèrent des lentilles selon l'invention uniquement par le fait qu'elles comportent, à la place du film en triacétate de cellulose (TAC) et de l'adhésif, la couche de primaire élastomère.

### Evaluation de la résistance thermique du traitement anti-reflets

On soumet les lentilles selon l'invention et les lentilles comparatives pendant une heure à un chauffage à une température de 80 °C. On laisse refroidir jusqu'à la température ambiante et l'on examine la surface à la recherche d'éventuelles craquelures du revêtement anti-reflets. En l'absence de craquelures, les mêmes lentilles sont chauffées de nouveau pendant une heure à une température supérieure de 10 °C à la température précédente, refroidies et examinées. On répète ce cycle de chauffage/refroidissement à des températures croissantes (intervalles de 10 °C) jusqu'à l'apparition de craquelures. La température critique est la température la plus basse provoquant l'apparition de telles craquelures.

Le Tableau 1 montre les températures critiques constatées pour deux lentilles ophtalmiques selon l'invention portant un revêtement Crizal^{®} Alizé^{®} et Crizal Forte^{®}, en comparaison de lentilles ophtalmiques selon l'état de la technique qui comportent, à la place du film thermoplastique, une couche de primaire à base de latex.

Pour les lentilles à revêtement Crizal Forte^{®}, les mesures ont été répétées après 1 mois, puis de nouveau après 3 mois de conservation.

### Evaluation de la résistance mécanique du revêtement anti-reflets

On applique, à température ambiante, une charge compressive de 50 daN au centre de la lentille pendant 10 secondes. Après examen de la surface de la lentille à la recherche d'éventuelles craquelures, on recommence l'application d'une charge compressive d'une valeur nominale supérieure de 5 daN à celle appliquée précédemment. Ce cycle est répété jusqu'à apparition de craquelures dans le revêtement anti-reflets. La charge critique est la charge la plus basse pour laquelle des craquelures ont été observées.

Pour la température critique, 3 verres sont testés pour un résultat global.

Pour la charge critique, 6 verres sont testés pour la moyenne indiquée ci-dessous. Les différences obtenues sont significativement supérieures à l'incertitude de reproductibilité du test.

**Tableau 1**

| Température critique et charge critique de lentilles ophtalmiques anti-reflets | | | | |
|---|---|---|---|---|
| | **Selon l'invention** | Comparatif | **Selon l'invention** | Comparatif |
| | Crizal^{®} Alizé^{®} | Crizal^{®} Alizé^{®} | Crizal Forte^{®} | Crizal Forte^{®} |
| | Anti-abrasion | Anti-abrasion | Anti-abrasion | Anti-abrasion |
| | **Film TAC** | Primaire latex | **Film TAC** | Primaire latex |
| | Substrat polythiourethane | Substrat polythiourethane | Substrat polythiourethane | Substrat polythiourethane |
| | **Film TAC** | Primaire latex | **Film TAC** | Primaire latex |
| | Anti-abrasion | Anti-abrasion | Anti-abrasion | Anti-abrasion |

| | Crizal^{®} Alizé^{®} | Crizal^{®} Alizé^{®} | Crizal Forte^{®} | Crizal Forte^{®} |
|---|---|---|---|---|
| | ***Température critique*** | | | |
| T₀ | > **120 °C** | 100 °C | **120 °C** | 100 °C |
| T₀ + 1 mois | | | **110 °C** | |
| T₀ + 3 mois | | | **110 °C** | 80 °C |

| | ***Charge critique*** | | | |
|---|---|---|---|---|
| Epaisseur au centre de la lentille | 1,3 mm | 1,2 mm | 1,3 mm | 1,2 mm |
| Charge critique | **200 daN** | 118 daN | **195 daN** | 90 daN |

On constate que le remplacement d'un primaire élastique classique à base de latex par un film en polymère thermoplastique se traduit par une augmentation de la température critique d'une valeur d'au moins 20 °C. Cette augmentation s'accentue même au cours du temps car au bout de trois mois la température critique de la lentille Crizal^{®} F selon l'invention est toujours égale à 110 °C, tandis que celle de la lentille comparative correspondante a diminué jusqu'à 80 °C.

Le remplacement du primaire à base de latex par un film thermoplastique augmente également la charge critique des revêtements anti-reflets. Elle est proche de 200 daN pour les lentilles selon l'invention, alors qu'elle ne dépasse pas 120 daN pour des lentilles selon l'état de la technique.

Dans l'ensemble, on constate donc que le film de polymère thermoplastique collé sur le substrat réduit la sensibilité des revêtements anti-reflets aux déformations du substrat, qu'elles soient provoquées par dilatation thermique ou contrainte mécanique.

## Revendications

1. Article optique comprenant, dans l'ordre :
(a) un substrat transparent en verre organique, de préférence un substrat de lentille ophtalmique,
(b) une couche adhésive recouvrant au moins une des faces du substrat transparent,
(c) un film transparent en polymère thermoplastique fixé sur le substrat transparent par l'intermédiaire de la couche adhésive,
(d) un revêtement dur anti-abrasion recouvrant le film transparent en polymère thermoplastique, et
(e) un revêtement anti-reflets multicouches formé d'une alternance de couches minérales à fort et faible indice de réfraction.
**caractérisé en ce que** le polymère thermoplastique formant le film transparent est choisi parmi le triacétate de cellulose TAC et le poly(éthylène téréphtalate) PET ; et
la couche adhésive est une couche d'adhésif sensible à la pression ou une couche d'adhésif thermofusible.

2. Article optique selon la revendication 1, **caractérisé par le fait que** le polymère thermoplastique formant le film transparent a une température de transition vitreuse, mesurée par analyse mécanique dynamique, comprise entre 50 °C et 250 °C, de préférence entre 70 et 200 °C.

3. Article optique selon l'une quelconque des revendications précédentes, **caractérisé par le fait que** le film transparent en polymère thermoplastique a une épaisseur comprise entre 50 µm et 150 µm, de préférence entre 60 µm et 100 µm.

4. Article optique selon l'une quelconque des revendications précédentes, **caractérisé par le fait que** le revêtement anti-abrasion a une épaisseur comprise entre 1 µm et 15 µm, de préférence comprise entre 2 µm et 10 µm.

5. Article optique selon l'une quelconque des revendications précédentes, **caractérisé par le fait que** l'épaisseur de la couche adhésive est comprise entre 10 µm et 40 µm, de préférence entre 15 et 30 µm.

6. Procédé de fabrication d'un article optique selon les revendications précédentes, comprenant :
(A) la mise à disposition d'un substrat transparent, de préférence d'un substrat de lentille ophtalmique, en verre organique,
(B) le dépôt d'un revêtement anti-abrasion sur un film transparent en polymère thermoplastique,
(C) le collage de la structure bi-couche obtenue à l'étape (B) par l'intermédiaire d'une couche adhésive sur le substrat transparent, et
(D) la formation d'un revêtement anti-reflets multicouches constitué d'une alternance de couches minérales à fort et faible indice de réfraction, sur le revêtement dur anti-abrasion, ledit polymère thermoplastique formant le film transparent étant choisi parmi le triacétate de cellulose TAC et le poly(éthylène téréphtalate) PET ; et
la couche adhésive étant une couche d'adhésif sensible à la pression ou une couche d'adhésif thermofusible.

7. Procédé selon la revendication 6, **caractérisé par le fait que** l'étape de collage (C) du procédé selon l'invention est précédée d'une étape de thermoformage de la structure bi-couche, préparée à l'étape (B), à une température inférieure à la température de transition vitreuse du polymère thermoplastique.

8. Utilisation d'un film transparent en polymère thermoplastique choisi parmi le triacétate de cellulose TAC et le poly(éthylène téréphtalate) PET dans un article optique comprenant un substrat transparent en verre organique, un revêtement dur anti-abrasion et un revêtement anti-reflets multicouche formé d'une alternance de couches minérales à fort et faible indice de réfraction ;
ledit film transparent en polymère thermoplastique étant positionné entre le substrat transparent et le revêtement anti-abrasion et étant fixé sur le substrat transparent par l'intermédiaire d'une couche adhésive choisie parmi une couche d'adhésif sensible à la pression ou une couche d'adhésif thermofusible ;
pour réduire le craquèlement du revêtement anti-reflets.

## Patentansprüche

1. Optischer Gegenstand, umfassend in folgender Reihenfolge:
(a) ein transparentes Substrat aus organischem Glas, vorzugsweise ein Substrat einer ophthalmischen Linse,
(b) eine Klebeschicht, die mindestens eine der Flächen des transparenten Substrats bedeckt,
(c) einen transparenten Film aus thermoplastischem Polymer, der auf dem transparenten Substrat mithilfe der Klebeschicht befestigt ist,
(d) eine harte abriebfeste Beschichtung, die den transparenten Film aus thermoplastischem Polymer bedeckt, und
(e) eine mehrschichtige Antireflexionsbeschichtung, die aus abwechselnden mineralischen Schichten mit hohem und niedrigem Brechungsindex hergestellt wird,
**dadurch gekennzeichnet, dass** das thermoplastische Polymer, das den transparenten Film bildet, aus Cellulosetriacetat CTA und Poly(ethylenterephthalat) PET ausgewählt ist; und
die Klebeschicht eine Schicht aus druckempfindlichem Klebstoff oder eine Schicht aus heißschmelzbarem Klebstoff ist.

2. Optischer Gegenstand nach Anspruch 1, **dadurch gekennzeichnet, dass** das thermoplastische Polymer, das den transparenten Film bildet, eine durch dynamischmechanische Analyse gemessene Glasübergangstemperatur zwischen 50°C und 250°C, vorzugsweise zwischen 70 und 200°C, hat.

3. Optischer Gegenstand nach einem der vorhergehenden Ansprüche, **dadurch gekennzeichnet, dass** der transparente Film aus thermoplastischem Polymer eine Dicke zwischen 50 µm und 150 µm, vorzugsweise zwischen 60 µm und 100 µm, hat.

4. Optischer Gegenstand nach einem der vorhergehenden Ansprüche, **dadurch gekennzeichnet, dass** die abriebfeste Beschichtung eine Dicke zwischen 1 µm und 15 µm, vorzugsweise zwischen 2 µm und 10 µm, hat.

5. Optischer Gegenstand nach einem der vorhergehenden Ansprüche, **dadurch gekennzeichnet, dass** die Dicke der Klebeschicht zwischen 10 µm und 40 µm, vorzugsweise zwischen 15 und 30 µm, beträgt.

6. Verfahren zur Herstellung eines optischen Gegenstands nach einem der vorhergehenden Ansprüche, umfassend:
(A) Bereitstellen eines transparenten Substrats, vorzugsweise eines Substrats einer ophthalmischen Linse, aus organischem Glas,
(B) Aufbringen einer abriebfesten Beschichtung auf einem transparenten Film aus thermoplastischem Polymer,
(C) Kleben der im Schritt (B) erhaltenen doppelschichtigen Struktur mithilfe einer Klebeschicht auf das transparente Substrat und
(D) Herstellen einer mehrschichtigen Antireflexionsbeschichtung, bestehend aus abwechselnden mineralischen Schichten mit hohem und niedrigem Brechungsindex, auf der harten abriebfesten Beschichtung,
wobei das thermoplastische Polymer, das den transparenten Film bildet, aus Cellulosetriacetat CTA und Poly(ethylenterephthalat) PET ausgewählt ist; und die Klebeschicht ist eine Schicht aus druckempfindlichem Klebstoff oder eine Schicht aus heißschmelzbarem Klebstoff ist.

7. Verfahren nach Anspruch 6, **dadurch gekennzeichnet, dass** dem Klebeschritt (C) des Verfahrens gemäß der Erfindung ein Schritt des Thermoformens der doppelschichtigen Struktur, die im Schritt (B) hergestellt wird, bei einer Temperatur unterhalb der Glasübergangstemperatur des thermoplastischen Polymers vorausgeht.

8. Verwendung eines transparenten Films aus thermoplastischem Polymer, ausgewählt aus Cellulosetriacetat CTA und Poly(ethylenterephthalat) PET, in einem optischen Gegenstand, umfassend ein transparentes Substrat aus organischem Glas, ein harte abriebfeste Beschichtung und eine mehrschichtige Antireflexionsbeschichtung, die aus abwechselnden mineralischen Schichten mit hohem und niedrigem Brechungsindex gebildet wird;
wobei der transparente Film aus thermoplastischem Polymer zwischen dem transparenten Substrat und der abriebfesten Beschichtung positioniert und auf dem transparenten Substrat mithilfe einer Klebeschicht, ausgewählt aus einer Schicht aus druckempfindlichem Klebstoff oder einer Schicht aus heißschmelzbarem Klebstoff, befestigt wird,
um die Rissbildung der Antireflexionsschicht zu verringern.

## Claims

1. Optical article comprising, in that order:
(a) a transparent substrate of organic glass, preferably a substrate of an ophthalmic lens,
(b) an adhesive layer covering at least one of the faces of the transparent substrate,
(c) a transparent film of thermoplastic polymer fixed on the transparent substrate by means of the adhesive layer,
(d) an anti-abrasion hard coating covering the transparent film of thermoplastic polymer, and
(e) a multilayer antireflection coating formed from alternating mineral layers with high and low refractive index,
**characterized in that** the thermoplastic polymer forming the transparent film is selected from cellulose triacetate CTA and poly(ethylene terephthalate) PET; and
the adhesive layer is a layer of pressure-sensitive adhesive or a layer of hot-melt adhesive.

2. Optical article according to Claim 1, **characterized in that** the thermoplastic polymer forming the transparent film has a glass transition temperature, measured by dynamic mechanical analysis, between 50°C and 250°C, preferably between 70 and 200°C.

3. Optical article according to any one of the preceding claims, **characterized in that** the transparent film of thermoplastic polymer has a thickness between 50 µm and 150 µm, preferably between 60 µm and 100 µm.

4. Optical article according to any one of the preceding claims, **characterized in that** the anti-abrasion coating has a thickness between 1 µm and 15 µm, preferably between 2 µm and 10 µm.

5. Optical article according to any one of the preceding claims, **characterized in that** the thickness of the adhesive layer is between 10 µm and 40 µm, preferably between 15 and 30 µm.

6. Method of manufacturing an optical article according to the preceding claims, comprising:
(A) providing a transparent substrate, preferably a substrate of an ophthalmic lens, of organic glass,
(B) depositing an anti-abrasion coating on a transparent film of thermoplastic polymer,
(C) gluing the bilayer structure obtained in step (B) by means of an adhesive layer onto the transparent substrate, and
(D) forming a multilayer antireflection coating consisting of alternating mineral layers of high and low refractive index, on the anti-abrasion hard coating, said thermoplastic polymer forming the transparent film being selected from cellulose triacetate CTA and poly(ethylene terephthalate) PET; and the adhesive layer being a layer of pressure-sensitive adhesive or a layer of hot-melt adhesive.

7. Method according to Claim 6, **characterized in that** the gluing step (C) of the method according to the invention is preceded by a step of thermoforming of the bilayer structure, prepared in step (B), at a temperature below the glass transition temperature of the thermoplastic polymer.

8. Use of a transparent film of thermoplastic polymer selected from cellulose triacetate CTA and poly(ethylene terephthalate) PET in an optical article comprising a transparent substrate of organic glass, an anti-abrasion hard coating and a multilayer antireflection coating formed from alternating mineral layers with high and low refractive index;
said transparent film of thermoplastic polymer being positioned between the transparent substrate and the anti-abrasion coating and being fixed on the transparent substrate by means of an adhesive layer selected from a layer of pressure-sensitive adhesive or a layer of hot-melt adhesive;
for reducing cracking of the antireflection coating.
